# EUROPEAN PATENT APPLICATION

(11) **EP 2 980 013 A1**
(43) Date of publication of application: **03.02.2016**
(21) Application number: 13879694.1
(22) Date of filing: 20.12.2013
(51) Int. Cl.: B67D 1/14, B67D 1/07, B67D 1/08, F16K 27/00

(54) **WATER SERVER**

(30) Priority: 27.03.2013 JP 2013066139
(71) Applicant: Kabushiki Kaisha Cosmo Life, Kakogawa-shi Hyogo 675-0032 (JP)
(72) Inventor: ORITA Yoshinori, Kakogawa-shi Hyogo 675-0068 (JP)
(74) Representative: Grünecker Patent- und Rechtsanwälte PartG mbB
(86) International application number: PCT/JP2013/084231
(87) International publication number: WO 2014/155875

(57) **Abstract**

The present invention provides a water dispenser in which proliferation of bacteria in discharge valves thereof can be prevented. Each of the discharge valves (8 and 9) in this water dispenser includes: a body (54) which is made of a material(s) capable of transmitting ultraviolet light, and which defines a flow path (48) extending from an inlet (46) to an outlet (47) of each of the discharge valves (8 and 9); and an ultra violet light emitting source (55) configured to irradiate ultraviolet light to the body (54); so that the inner wall surface of the flow path (48) and the surface of the valve body (42) can be sterilized by the ultraviolet light. An outer wall surface portion (59) of the body (54) extending along the flow path (48) is covered with an ultraviolet light reflecting layer (60), so that the ultraviolet light irradiated by the ultra violet light emitting source (55) is more likely to be directed to the inner wall surface of the flow path (48) and the like. The inner wall surface of an outlet-side pipe line (57) is made of an ultraviolet light transmitting material (58) containing a photocatalyst, so as to provide an improved sterilization efficiency and a water-repellent effect.

## Description

### TECHNICAL FIELD

The present invention relates to a water dispenser which supplies drinking water from a replaceable raw water container filled with drinking water such as mineral water.

### BACKGROUND ART

Conventionally, water dispensers have been used primarily in offices and in hospitals. With a growing interest in water safety and health in recent years, however, water dispensers are gaining popularity among ordinary households. In such a water dispenser, a replaceable raw water container is placed in a housing, and drinking water filled in the raw water container is transferred to a temperature control tank(s) housed in the housing by gravity, or the drinking water is pumped up by a pump. As the temperature control tank, at least one of a cold water tank, configured to cool and store drinking water, and a hot water tank, configured to heat and store drinking water is provided in the water dispenser. A discharge valve is connected to the temperature control tank. When a user opens the discharge valve, drinking water in the temperature control tank is discharged through an outlet of the discharge valve (for example, in the water dispenser disclosed in the below-identified Patent Document 1).

### PRIOR ART DOCUMENTS

### PATENT DOCUMENTS

Patent Document 1: JP 2010-247838 A

### SUMMARY OF THE INVENTION

### PROBLEMS TO BE SOLVED BY THE INVENTION

While the valve is opened, the portion of a flow path, which extends from an inlet to the outlet of the discharge valve, between the inlet and a valve seat is filled with low temperature or high temperature drinking water which is cooled or heated in the temperature control tank. Since the low temperature or high temperature drinking water has an antibacterial effect due to its own temperature, there is no sanitary risk, in normal circumstances, that proliferation of bacteria could occur at the inner wall surface of the flow path and the surface portion of the valve body which are located on the inlet side. If the valve is kept closed for a long period of time, drinking water remaining in the flow path of the discharge valve is cooled or warmed to a normal temperature, thereby losing the antibacterial effect due to temperature. However, as long as bacteria are kept from entering, there is no risk that the inlet side of the flow path is contaminated with bacteria.

On the other hand, the inner wall surface of the flow path and the surface portion of the valve body which are located in the portion of the flow path between the valve seat and the outlet, are more likely to be contaminated by airborne bacteria, and thus, susceptible to proliferation of bacteria, since they are exposed to the external air while the valve is closed, and often have water droplets attached thereto.

In cases where the temperature control tank is a cold water tank, if airborne bacteria are attached to the portion of the discharge valve on the outlet side, the bacteria implanted on the inner wall surface thereof gradually spread their mycelia toward the inlet side of the discharge valve, and further spread into an outlet pipe extending from the tank to the discharge valve. Consequently, there is a potential risk that the proliferation of bacteria could spread to the portion of drinking water in the cold water tank whose temperature is relatively high (closer to the normal temperature).

In cases where the temperature control tank is a hot water tank, the problem as described above for cold water passages is less likely to occur, even if airborne bacteria are attached thereto, because hot water passages including an outlet pipe and a discharge valve are sterilized by hot water.

However, when a user discharges hot water into a cup or the like, there are cases where droplets containing sugar and/or protein, contained in coffee, milk and/or the like could be attached to the vicinity of the outlet of the discharge valve. If hot water remained unused for a long period of time with the droplets attached to the discharge valve, there is a potential risk that the bacteria could spread in the discharge valve, at a rate significantly faster than the rate expected when mineral water is attached thereto. Therefore, even the discharge valve for hot water is not free of risk.

Accordingly, an object of the present invention is to provide a water dispenser in which the proliferation of bacteria in the discharge valve can be prevented.

### MEANS FOR SOLVING THE PROBLEMS

In order to solve the above mentioned problems, the present invention has adopted the following constitution.

A water dispenser comprising: a temperature control tank housed in a housing, and a discharge valve having an outlet and connected to the temperature control tank;
wherein the temperature control tank (2) and the discharge valve (8) are configured such that drinking water in the temperature control tank can be discharged through the outlet of the discharge valve;
wherein the discharge valve comprises: a body which is made of a material(s) capable of transmitting ultraviolet light, and which defines a flow path extending from an inlet of the discharge valve to the outlet; and an ultra violet light emitting source provided in the body.

In the water dispenser having the above described constitution, the ultraviolet light emitted by the ultra violet light emitting source spreads inside the body made of the material(s) capable of transmitting ultraviolet light, and thereby irradiated to a wide area of the inner wall surface of the flow path and the surface of the valve body. Since the inner wall surface of the flow path and the surface of the valve body can be sterilized by the ultraviolet light, the proliferation of bacteria in the discharge valve can be prevented.

It is preferred that an outer wall surface portion of the body extending along the flow path be covered by an ultraviolet light reflecting layer so as not to be exposed to outside. With this arrangement, ultraviolet light which has reached to the outer wall surface portion extending along the flow path is reflected by the ultraviolet light reflecting layer, and more likely to be directed toward the inner wall surface of the flow path and the surface of the valve body, and thus, the sterilization efficiency in the discharge valve can be further improved.

More preferably, the discharge valve is an angle valve having the outlet facing downward. With this arrangement, even if the ultraviolet light emitted by the ultra violet light emitting source leaks from the outlet, the leaked ultraviolet light is less likely to be irradiated to a user. Further, if the discharge valve is an angle valve, the ultra violet light emitting source can be disposed downward of an inlet-side pipe line extending between the inlet and the valve seat. If the ultra violet light emitting source is disposed as described above, it is possible to irradiate ultraviolet light to the inner wall surface of the inlet-side pipe line, and also to the inner wall surface of an outlet-side pipe line extending between the valve seat and the outlet, without having to bypass the inlet-side pipe line. As a result, ultraviolet light can be irradiated to the entire inner wall surface of the flow path efficiently.

The inner wall surface of the outlet-side pipe line extending between the valve seat and the outlet may be made of an ultraviolet light transmitting material capable of transmitting ultraviolet light and containing a photocatalyst. With this arrangement, the sterilization efficiency at the inner wall surface of the outlet-side pipe line, which is exposed to the external air, can be improved by the photocatalyst. At the same time, a water-repellent effect provided by the photocatalyst prevents water droplets from remaining on the inner wall surface of the outlet-side pipe line.

### EFFECT OF THE INVENTION

In the water dispenser according to the present invention, since the inner wall surface of the flow path and the surface of the valve body can be sterilized by ultraviolet light, by adopting the above mentioned constitutions, it is possible to prevent the proliferation of bacteria in the discharge valve.

### BRIEF DESCRIPTION OF THE DRAWINGS

FIG. 1 is a longitudinal sectional view of a water dispenser embodying the present invention.
FIG. 2 is a longitudinal sectional view of the water dispenser shown in FIG. 1, illustrating the flow of drinking water when cold water is being discharged.
FIG. 3 is a longitudinal sectional view of the water dispenser shown in FIG. 1, illustrating the flow of drinking water when hot water is being discharged.
FIG. 4 is a longitudinal sectional view of the water dispenser shown in FIG. 1, illustrating the flow of drinking water when the sterilization by hot water is carried out.
FIG. 5(a) is a sectional view of a discharge valve of the water dispenser according to the present invention, when the valve is closed, and FIG. 5(b) is a perspective view of the discharge valve of the water dispenser according to the present invention, showing the external appearance thereof seen from the front and obliquely downward.

### MODE FOR CARRYING OUT THE INVENTION

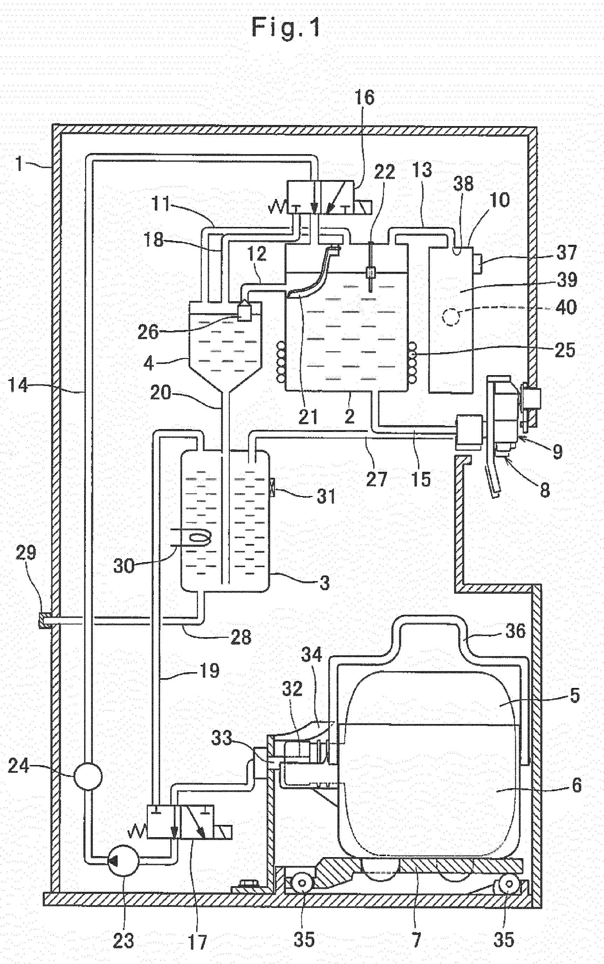

A water dispenser embodying the present invention is shown in FIG. 1. This water dispenser includes: a temperature control tank 2 (hereinafter referred to as "cold water tank 2") in which cooled drinking water is to be stored; and a temperature control tank 3 (hereinafter referred to as "hot water tank 3") in which heated drinking water is to be stored; a buffer tank 4 provided laterally of the cold water tank 2 and containing air and drinking water in upper and lower layers; a bottle basket 6 provided at a position lower than that of the cold water tank 2 and configured to receive a replaceable raw water container 5 in a position lying on its side; a mounting table 7 onto which the bottle basket 6 is placed; a discharge valve 8 for discharging cold water; a discharge valve 9 for discharging hot water; an air sterilization chamber 10; and a housing 1 containing therein the cold water tank 2, the hot water tank 3, the buffer tank 4, the bottle basket 6, the mounting table 7, the discharge valve 8 for cold water, the discharge valve 9 for hot water, and the air sterilization chamber 10.

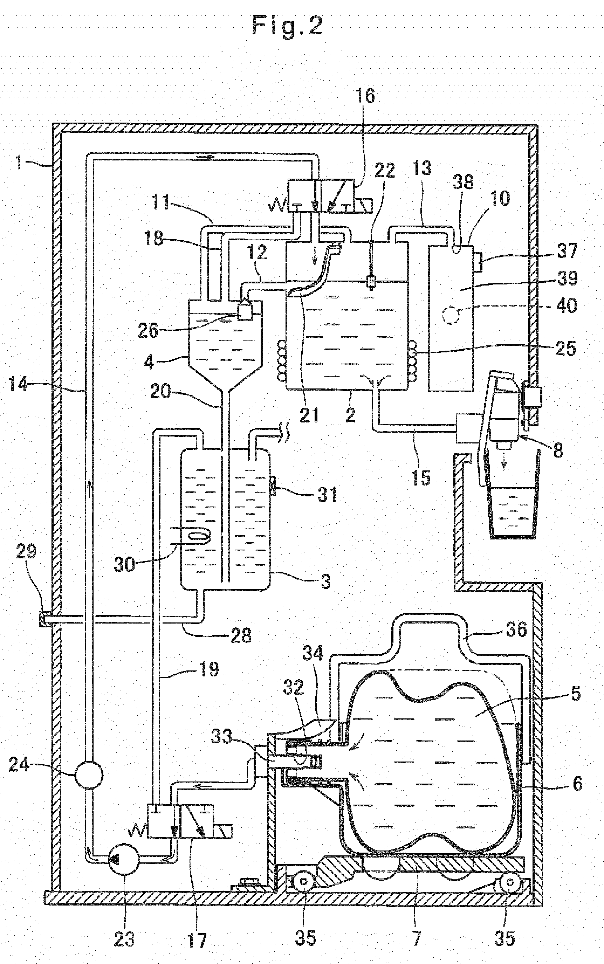

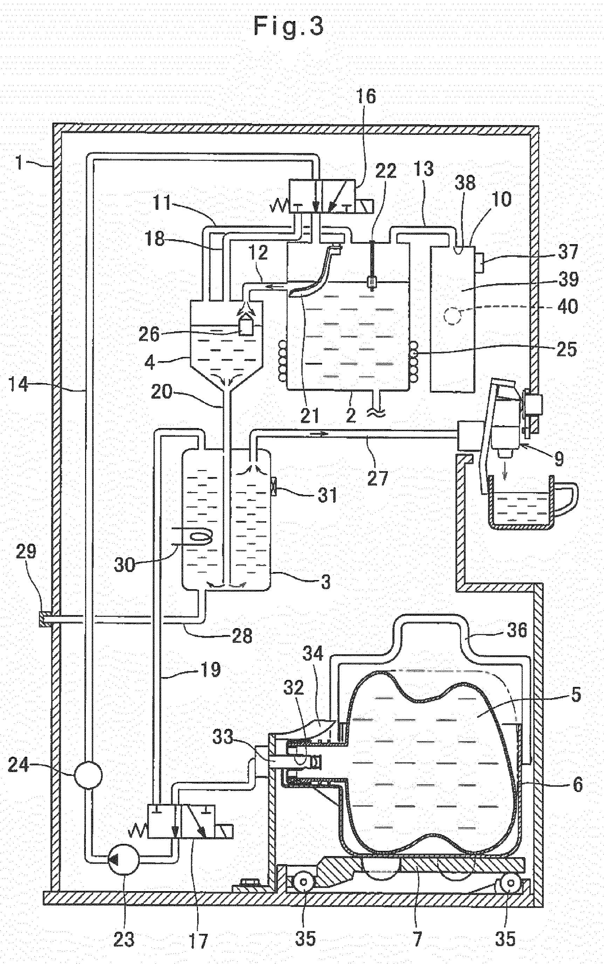

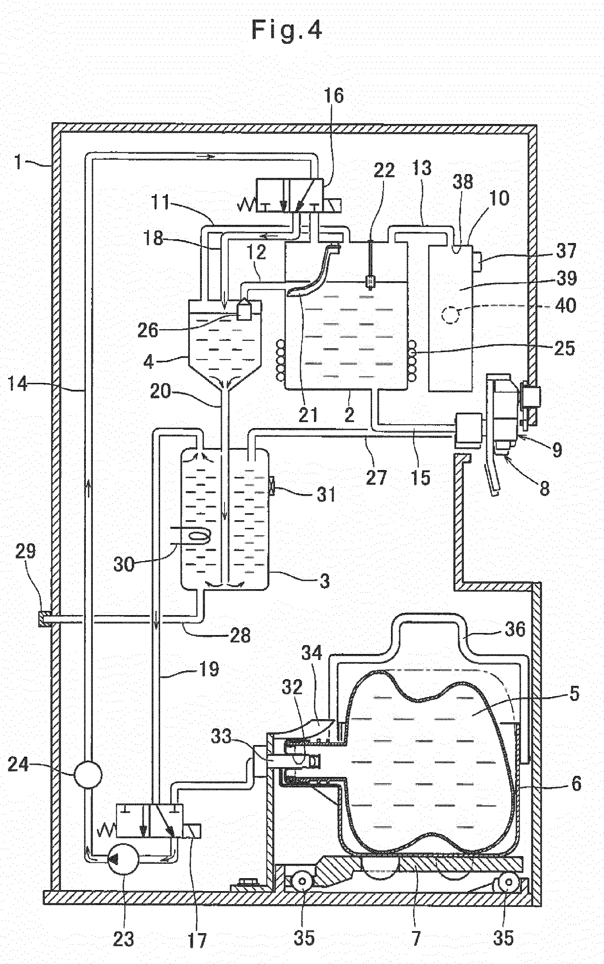

The cold water tank 2 communicates with the buffer tank 4 through an air pipe 11 and a buffer tank water supply pipe 12; communicates with the air sterilization chamber 10 through an air introduction passage 13; communicates with the raw water container 5 through a raw water pumping pipe 14; and communicates with the discharge valve 8 through an outlet pipe 15 extending from the cold water tank 2 and connected to the discharge valve 8. The raw water pumping pipe 14 is provided with a first three-way valve 16 and a second three-way valve 17. The three-way valves 16 and 17 are configured to be switchable between normal flow path positions where a normal flow path is formed, and sterilization flow path positions where a sterilization flow path is formed. When switched to form the normal flow path, the flow of water into a first sterilization pipe 18 and the flow of water into the second sterilization pipe 19 are blocked to allow drinking water in the raw water container 5 to be transferred to the cold water tank 2 through the raw water pumping pipe 14, so that cold water and hot water can be discharged, as shown in FIG. 2 and FIG. 3 to be described later. When switched to form the sterilization flow path, the flow of water from the raw water container 5 to the raw water pumping pipe 14 and the flow of water from the raw water pumping pipe 14 to the cold water tank 2 are blocked to form a flow of water in a closed loop, in which water is allowed to circulate through the raw water pumping pipe 14, the first sterilization pipe 18, the buffer tank 4, the hot water tank water supply pipe 20, the hot water tank 3 and the second sterilization pipe 19, and back to the raw water pumping pipe 14 again, as shown in FIG. 4 to be described later. In this embodiment, the three-way valves 16 and 17 are solenoid valves configured to be switched to form the sterilization flow path when energized, and to be switched to form the normal flow path when deenergized. Each of the first three-way valve 16 and the second three-way valve 17 shown in FIG. 1 may be replaced by a valve assembly comprising a plurality of two-way valves to achieve the same effect.

A guide plate 21 is provided in the upper portion of the cold water tank 2. The guide plate 21 is formed with a slope so that the direction of the flow of drinking water supplied from the raw water pumping pipe 14 can be redirected to the horizontal direction. The guide plate 21 prevents the drinking water supplied into the cold water tank 2 from spreading to the entire cold water tank 2, and thus the temperature of the cold water in the lower portion of the cold water tank 2 can be maintained low. A water level sensor 22 is provided in the cold water tank 2, and configured to detect the water level of the drinking water contained therein. When the water level detected by the water level sensor 22 falls below a predetermined limit, a pump 23 provided in the raw water pumping pipe 14 is actuated to allow transfer of drinking water from the raw water container 5 to the cold water tank 2. In general, the capacity of the cold water tank 2 is from about 2 to 4 liters.

A diaphragm pump or a gear pump can be used as the pump 23, for example. In the diaphragm pump, the reciprocation of a diaphragm increases and decreases the volume of a pump chamber provided therein, and drinking water is allowed to be pumped up and discharged corresponding to the change in the volume of the pump chamber. In the gear pump, drinking water trapped between the tooth spaces of a pair of gears and the inner surface of the casing of the gear pump is transferred by the rotation of the gears. A flow rate sensor 24 is provided in the raw water pumping pipe 14, on the side of the discharge port of the pump 23. When the flow rate sensor 24 detects that there is no raw water remaining in the raw water container 5, a container replacement lamp, which is not shown, is turned on to notify a user of this fact. A cooling device 25 is provided on the outer peripheral surface of the lower portion of the cold water tank 2. The cooling device 25 is capable of cooling the drinking water in the cold water tank 2 to about 5 degrees Celsius.

The buffer tank 4 communicates with the cold water tank 2 through the air pipe 11 and the buffer tank water supply pipe 12; communicates with the first three-way valve 16 through the first sterilization pipe 18, and communicates with the hot water tank 3 through the hot water tank water supply pipe 20. A float valve 26 is provided at the end portion of the buffer tank water supply pipe 12 on the side of the buffer tank 4. When the drinking water in the buffer tank 4 is increased to exceed a predetermined level due to the water being transferred from the cold water tank 2, the float valve 26 blocks the end portion of the buffer tank water supply pipe 12 to prevent the drinking water in the buffer tank 4 from flowing back into the cold water tank 2. Thus, when hot water flows back from the hot water tank 3 into the buffer tank 4 through the hot water tank water supply pipe 20, the float valve 26 prevents this hot water from further flowing back into the cold water tank 2 through the buffer tank water supply pipe 12. Further, when the sterilization by hot water circulation to be described later is carried out, the flowing back of the hot water from the buffer tank 4 into the cold water tank 2 can also be prevented. This prevents the temperature rise of the cold water in the cold water tank 2, and the proliferation of bacteria in the cold water tank 2 associated with the temperature rise. The lower portion of the buffer tank 4 is formed in the shape of a cone whose diameter decreases as it gets closer to its bottom end. Therefore, the buffer tank 4 has no corners at its lower portion where drinking water tends to remain when the sterilization by hot water circulation to be described later is carried out. In general, the capacity of the buffer tank 4 is from about 0.2 to 0.5 liters.

The hot water tank 3 communicates with the buffer tank 4 through the hot water tank water supply pipe 20; communicates with the second three-way valve 17 through the second sterilization pipe 19; and communicates with the discharge valve 9 through an outlet pipe 27 extending from the hot water tank 3 and connected to the discharge valve 9. The hot water tank 3 is also connected a drain pipe 28 through which water remaining in the hot water tank 3 is drained. Other than the time when the water remaining in the hot water tank 3 is drained, the outlet port of the drain pipe 28 is closed with a plug 29. A heater 30 is provided inside the hot water tank 3, and configured to heat the drinking water contained therein. The temperature of the heated drinking water is detected by a temperature sensor 31 attached to the wall of the hot water tank 3. The hot water tank 3 differs from the cold water tank 2 and the buffer tank 4 in that it has a structure in which the entire tank is filled with drinking water. The interior of the hot water tank 3 is pressurized by the weight of the drinking water contained in the buffer tank 4, which is provided at a position higher than that of the hot water tank 3, and the pressure applied to the hot water tank 3 allows for discharging of hot water contained therein through the outlet of the discharge valve 9. In general, the capacity of the hot water tank 3 is from about 1 to 2 liters. While a sheathed heater is used as the heater 30 in this embodiment, an embodiment is also possible in which a band heater is wrapped around the outer periphery of hot water tank 3.

The raw water container 5, which is received in the bottle basket 6, is provided with a water outlet port 32 in which a joint portion 33 of the raw water pumping pipe 14 is inserted in the horizontal direction. The joint portion 33 comprises a hollow cylindrical member through which drinking water is allowed to flow freely, and provided at a position higher than that of the pump 23, which is configured to pump up drinking water. A guide member 34 is provided in the vicinity of the joint portion 33. When the water outlet port 32 of the raw water container 5 is inserted onto the joint portion 33, the guide member 34 guides the raw water container 5 so that the axes of the water outlet port 32 and the joint portion 33 coincide. Rollers 35 are provided on the bottom side of the mounting table 7 onto which the bottle basket 6 is placed, and on the upper side of the bottom plate of the housing 1. The rolling movement of the rollers 35 allows the bottle basket 6 in which the raw water container 5 is received to be easily settled into, and taken out of the housing 1. The bottle basket 6 is provided with a handle 36, and by holding the handle 36, the bottle basket 6 can be easily placed on the mounting table 7. The raw water container 5 used in this embodiment is a soft type container made of a thin sheet of a polyethylene terephthalate (PET) resin or polyethylene (PE) resin. This type of raw water container 5 has a relatively high flexibility, and collapses to reduce its internal volume as the drinking water contained therein is pumped out. In general, a new raw water container 5 is filled with from about 10 to 12 liters of drinking water.

Although a soft type container is used as the raw water container 5 in this embodiment, it is also possible to use a rigid type container whose volume does not change even when the drinking water contained therein is pumped out, or a bag-in-box type container in which a bag made of a highly flexible resin film is placed inside a box such as a corrugated carton.

The air sterilization chamber 10 includes a hollow casing 39 provided with an air inlet port 37 and an ozone outlet port 38; and an ozone generator 40 provided within the casing 39 and configured to convert oxygen in the air to ozone. The ozone outlet port 38 communicates with the cold water tank 2 through the air introduction passage 13. By transferring the ozone generated in the air sterilization chamber 10 to the cold water tank 2 and the buffer tank 4, and by sterilizing air contained in these tanks with ozone, the sanitation inside the cold water tank 2 and the buffer tank 4 can be improved. The ozone generator 40 may be a low-pressure mercury lamp, a silent discharge apparatus, or the like.

When cold water is discharged, the energization to both the three-way valves 16 and 17 is terminated, so that the first three-way valve 16 is switched to secure the flow of water from the raw water pumping pipe 14 toward the cold water tank 2, and the second three-way valve 17 is switched to secure the flow of water from the raw water container 5 toward the raw water pumping pipe 14, as shown in FIG. 2. This forms the normal flow path, which allows for discharging of cold water. If the discharge valve 8 is opened at this time, the interior of the cold water tank 2 is pressurized due to the weight of the drinking water contained in the cold water tank 2, and this pressure allows the cold water to be discharged through the outlet of the discharge valve 8. When the water level sensor 22 detects the fall of the water level in the cold water tank 2, as the cold water is discharged, the pump 23 is actuated to carry out the transfer of drinking water from the raw water container 5 to the cold water tank 2. By the transfer of drinking water, the water level in the cold water tank 2 rises again to recover the previous level.

When hot water is discharged, the energization to both the three-way valves 16 and 17 is terminated, so that the first three-way valve 16 is switched to secure the flow of water from the raw water pumping pipe 14 toward the cold water tank 2, and the second three-way valve 17 is switched to secure the flow of water from the raw water container 5 toward the raw water pumping pipe 14, as shown in FIG. 3. This forms the normal flow path, which allows for discharging of hot water. If the discharge valve 9 is opened at this time, hot water is discharged through the outlet of the discharge valve 9. When the amount of hot water in the hot water tank 3 is decreased, as the hot water is discharged, drinking water is promptly supplied from the buffer tank 4 to the hot water tank 3 through the hot water tank water supply pipe 21, by the amount of water decreased in the hot water tank 3. This causes the water level in the buffer tank 4 to fall, and this fall in the water level causes the float valve 26 to move away from its position blocking the end portion of the buffer tank water supply pipe 12 to allow water to flow therethrough, and drinking water is supplied from the cold water tank 2 to the buffer tank 4 through the buffer tank water supply pipe 12, until the water level in the buffer tank 4 is increased to push up the float valve 26 back to the position blocking the end portion of the buffer tank water supply pipe 12. When the water level sensor 22 detects the fall of the water level in the cold water tank 2, as a result of water being supplied to the buffer tank 4 therefrom, the pump 23 is actuated to carry out the transfer of drinking water from the raw water container 5 to the cold water tank 2. By the transfer of drinking water, the water level in the cold water tank 2 rises again to recover the previous level.

When the sterilization by hot water circulation is carried out, both the three-way valves 16 and 17 are energized, so that the first three-way valve 16 is switched to secure the flow of water from the raw water pumping pipe 14 toward the buffer tank 4, and the second three-way valve 17 is switched to secure the flow of water from the hot water tank 3 to the raw water pumping pipe 14, as shown in FIG. 4. This forms the sterilization flow path, which is a flow path in a closed loop, in which water is allowed to circulate through the raw water pumping pipe 14, the first sterilization pipe 18, the buffer tank 4, the hot water tank water supply pipe 20, the hot water tank 3 and the second sterilization pipe 19, and back to the raw water pumping pipe 14 again. By actuating the pump 23 to allow hot water to circulate within the sterilization flow path at this time, the sterilization inside the sterilization flow path can be carried out. The heater 30 is actuated as necessary so that the temperature of hot water is maintained at a predetermined temperature (for example, 85 degrees Celsius) or higher, which is effective for sterilization. During the sterilization, the pump 23 can be stopped as necessary. This is because, as long as hot water having a temperature of not less than the predetermined temperature is allowed to stay in the sterilization flow path, a sufficient sterilization effect can be obtained.

The cold water tank 2 is not included in the sterilization flow path which is formed in a closed path, as described above. Therefore, there is no potential risk that cold water in the cold water tank 2 is warmed up, and it is possible to provide a user with cold water cooled to a low temperature, even while the sterilization by hot water circulation is being carried out.

The water dispenser according to the present invention includes an automatic control device configured to turn off the cooling device 25 and the heater 30 when an input via a switch operation by a user n is confirmed, and to turn on the cooling device 25 and the heater 30 after a predetermined period of time has elapsed since the input. The predetermined period of time can be set, for example, to a value of 6 hours or more. If an additional input is confirmed while the cooling device 25 and the heater 30 are being turned off, the measurement of the predetermined period of time is reset, and starts over again. Such an automatic control can be provided, for example, by a timer control.

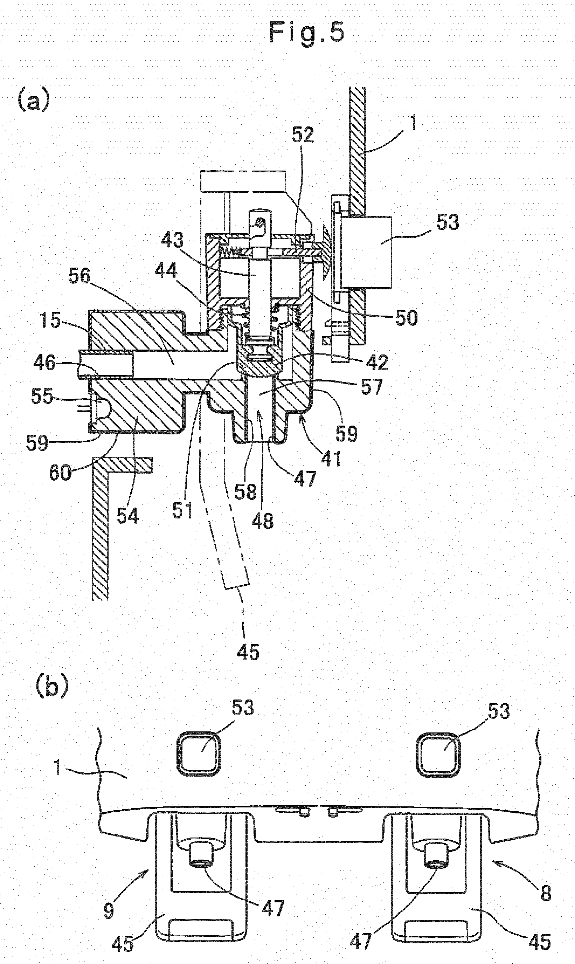

The discharge valves 8 and 9 of the present water dispenser are shown in FIG. 5. Since the discharge valve 9 has the same structure as the discharge valve 8, the structure of the discharge valve 8 will be described below as a representative example.

The discharge valve 8 includes: a valve casing 41; a valve body 42; a valve stem 43; a valve spring 44; and an operating lever 45.

An inlet 46 and an outlet 47 of the discharge valve 8 are formed in the valve casing 41. The discharge valve 8 is an angle valve having the outlet 47 facing downward. In other words, the valve casing 41 is formed with a flow path 48, in which the center line of the flow path 48 extending through the center of the inlet 46 is perpendicular to the center line thereof extending through the center of the outlet 47, and the direction of the flow path 48 extending from the inlet 46 to the outlet 47 is turned midway at right angles. The flow path 48 communicates with the outlet pipe 15 through the inlet 46.

The valve casing 41 is also formed with a valve body mounting hole which communicates with the flow path 48 in a vertical direction. The valve body 42 is a molded article made of a silicone rubber. The valve body mounting hole is sealed by a cap 50 attached to the valve casing 41 and by the valve body 42 in a water tight manner.

The valve stem 43 is connected to the valve body 42. The valve spring 44 is disposed between the cap 50 and the valve stem 43, and biasing the valve stem 43 in a valve closing direction (downward).

The operating lever 45 is configured to move the valve stem 43 in a valve opening direction (upward) against the biasing force provided by the valve spring 44.

While the discharge valve 8 is closed, the valve body 42 is kept in abutment with a valve seat 51 formed in the flow path 48 due to the biasing force of the valve spring 44, and discharging of cold water through the outlet 47 is blocked. If the lower end side of the operating lever 45 is pushed in toward the rear side of the water dispenser while the discharge valve 8 is closed, the valve stem 43 fixed to the upper end side of the operating lever 45 is pulled upward against the biasing force of the valve spring 44, based on the principle of leverage, with the upper end side of the operating lever 45 being its fulcrum. This causes the valve body 42 connected to the lower end of the valve stem 43 to elastically deform, and a gap is formed between the lower portion of the valve body 42 and valve seat 51, thereby allowing the cold water to pass therethrough to be discharged by the outlet 47.

In order to prevent the discharge valve 8 from being opened unexpectedly, a locking member 52 is provided to lock the valve stem 43, so that it cannot be pulled upward without intention. When a button 53 is operated, the locking member 52 is moved to a lock release position at which the pulling-up of the valve stem 43 is permitted.

The discharge valve 8 further includes a body 54 made of a material(s) capable of transmitting ultraviolet light, and an ultra violet light emitting source 55 configured to irradiate ultraviolet light to the body 54.

The entire flow path 48 is formed in the body 54. The inner wall surface of the flow path 48 comprises a surface which allows drinking water to flow from the inlet 46 to the outlet 47. The valve seat 51 is also included in the body 54. The ultraviolet light emitted from the ultra violet light emitting source 55 spreads inside the body 54 made of the material(s) capable of transmitting ultraviolet light; and reaches a wide area of the inner wall surface the flow path 48. The ultraviolet light which has reached the inner wall surface of the flow path 48, in the vicinity of the valve seat 51 and the valve body 42, passes through the inner wall surface of the flow path 48 to be irradiated to the surface of the valve body 42. Thus, a wide area of the inner wall surface of the flow path 48 and the valve body 42 can be sterilized by the ultraviolet light irradiated from the ultra violet light emitting source 55.

In this embodiment, the shape of the valve casing 41 is determined according to the shape of the body 54. This is merely for the sake of simplifying the structure, and it is also possible to house the body 54 in a valve casing formed separately from the body 54, for example, in order to improve the mechanical strength or to provide decorativeness.

The ultra violet light emitting source 55 may be an ultraviolet light emitting diode or a mercury lamp. It is preferred that the ultraviolet light irradiated by the ultra violet light emitting source 55 be the C-wave (having a wave length of less than 280 nm), which has the highest sterilization efficiency.

The power of the ultra violet light emitting source 55 is provided from the side of the housing 1. The power supply to the ultra violet light emitting source 55 can be carried out at any time, as appropriate, as long as the proliferation of bacteria in the discharge valve 8 can be contained to a level acceptable in terms of sanitation. For example, it is possible to turn on and off the ultra violet light emitting source 55 regularly by the timer control. Alternatively, the ultra violet light emitting source 55 can be configured so as to be turned on and off corresponding to the turning off and on of the cooling device 25 and/or the heater 30.

The ultra violet light emitting source 55 is disposed downward of an inlet-side pipe line 56 extending between the inlet 46 and the valve seat 51. Therefore, the ultra violet light emitting source 55 is capable of irradiating the ultraviolet light to the inner wall surface of the inlet-side pipe line 56, and also to the inner wall surface of an outlet-side pipe line 57 extending between the valve seat 51 and the outlet 47, without having to bypass the inlet-side pipe line 56.

The body 54 can be made of one or more kinds of ultraviolet light transmitting materials as appropriate, so long as the body 54 functions as a light passage which allows the ultraviolet light irradiated by the ultra violet light emitting source 55 to be delivered to the entire inner wall surface of the flow path 48.

The inner wall surface of the outlet-side pipe line 57 is made of an ultraviolet light transmitting material 58 containing a photocatalyst. The photocatalyst exhibits an oxidation-reduction capability when it absorbs ultraviolet light to be in an excited state. As the photocatalyst, titanium oxide can be used.

The ultraviolet light transmitting material 58 is a coating material prepared by dispersing particles of the photocatalyst in an ultraviolet light transmitting resin. Examples of the ultraviolet light transmitting resin include polypropylene, polyethylene and polyvinyl alcohol.

The portion of the body 54 other than the portion made of the ultraviolet light transmitting material 58 is made of another ultraviolet light transmitting material(s) having a higher ultraviolet light transmittance than the ultraviolet light transmitting material 58. After the entire shape of the flow path 48 has been formed inside the body 54 made of the other ultraviolet light transmitting material(s), by molding, the portion of the molded surface of the flow path 48 which is defined as the outlet-side pipe line 57 is coated with the ultraviolet light transmitting material 58. As the other ultraviolet light transmitting material(s), the above mentioned ultraviolet light transmitting resins or glasses can be used. Even if the particles of the photocatalyst are present in the portion of the body 54 away from the inner wall surface of the flow path 48, they do not contribute to improving the sterilization effect, and thus wasted. Therefore, it is preferred that the portion of the body 54 other than the portion made of the ultraviolet light transmitting material 58 be made of a material(s) having a higher ultraviolet light transmittance than the ultraviolet light transmitting material 58, without incorporating, at least not intentionally, the particles of the photocatalyst into the material(s).

The ultraviolet light emitted from the ultra violet light emitting source 55 is irradiated to the ultraviolet light transmitting material 58 from the outside of the outlet-side pipe line 57. A portion of the ultraviolet light irradiated to the ultraviolet light transmitting material 58 passes through gaps between the dispersed-particles of the photocatalyst contained in the ultraviolet light transmitting material 58 to reach the inner wall surface of the outlet-side pipe line 57. A portion of the ultraviolet light which has reached the inner wall surface is absorbed by the particles of photocatalyst at the inner wall surface. The portion of the ultraviolet light which has reached the inner wall surface but not absorbed by the particles of photocatalyst further passes through the inner wall surface. As a result, a sterilization effect due to the oxidation-reduction capability of the photocatalyst which has absorbed the ultraviolet light; a water-repellent effect provided by the photocatalyst which has absorbed the ultraviolet light; and a sterilization effect provided by the ultraviolet light itself which is passing through the inner wall surface; can be obtained at the inner wall surface of the outlet-side pipe line 57. Since the sterilization effect due to the oxidation-reduction capability of the photocatalyst is stronger than the sterilization effect provided by the ultraviolet light itself, the sterilization efficiency at the inner wall surface of the outlet-side pipe line 57 can be improved by the existence of the photocatalyst.

It is preferred that the inner wall surface of the outlet-side pipe line 57 alone be made of the ultraviolet light transmitting material 58. If the particles of the photocatalyst are contained in the portion of the inner wall surface of the flow path 48 between the inlet 46 and the valve seat 51, drinking water is decomposed to generate hydrogen, due to the oxidation-reduction capability of the photocatalyst. While the valve is closed, there is no place for the generated hydrogen to escape, and there is a potential risk that the parts constituting the discharge valve 8, particularly, the parts made of a synthetic resin, could be deteriorated earlier than intended, due to the hydrogen. The above mentioned risk can be avoided, if the inner wall surface of the outlet-side pipe line 57 alone is made of the ultraviolet light transmitting material 58. In cases where the portion of the inner wall surface of the flow path 48 between the inlet 46 and the valve seat 51 is made of the ultraviolet light transmitting material 58, it is preferable to take a measure for preventing the deterioration of parts due to hydrogen, such as preparing the body 54 with a glass.

Of the body 54, the outer wall surface portion 59 extending along the flow path 48 is covered by an ultraviolet light reflecting layer 60, so that the outer wall surface portion 59 is not exposed to outside. The outer wall surface portion 59 extending along the flow path 48 is the outer surface of the body 54 which defines the flow path 48. The ultraviolet light reflecting layer 60 reflects the ultraviolet light irradiated by the ultra violet light emitting source 55. The ultraviolet light reflecting layer 60 can be prepared by subjecting the body 54 formed by molding to a surface treatment by a vacuum deposition, plating or the like. Alternatively, the ultraviolet light reflecting layer 60 may be a metal cover fitted to the body 54 formed by molding. It is not necessary to cover the entire outer wall surface portion 59 with the ultraviolet light reflecting layer 60. Some regions of the outer wall surface portion 59 may be left uncovered by the ultraviolet light reflecting layer 60, so that other parts can be mounted thereto. In the embodiment shown in the figures, the inner surface of a hole into which the ultra violet light emitting source 55 is mounted, and the male screw portion constituting an engaging surface with the cap 50 are included in the outer wall surface portion 59, but they are not covered by the ultraviolet light reflecting layer 60, because they are covered by the ultra violet light emitting source 55 and the cap 50, respectively.

Since the ultraviolet light reflected by the ultraviolet light reflecting layer 60 changes its direction inward, the ultraviolet light is more likely to be directed toward the inner wall surface of the flow path 48 and toward the surface of the valve body 42. Even if only one ultra violet light emitting source 55 is provided, since the ultraviolet light reflecting layer 60 surrounds the circumference of the flow path 48, ultraviolet light emitted by the ultra violet light emitting source 55 is reflected by the ultraviolet light reflecting layer 60 repeatedly, to be scattered around the inlet-side pipe line 56, or around the outlet-side pipe line 57.

As described above, in this water dispenser, the proliferation of bacteria in the discharge valves 8 and 9 can be prevented, since, in each of the discharge valves 8 and 9, the ultraviolet light emitted by the ultra violet light emitting source 55 spreads inside the body 54 capable of transmitting the ultraviolet light, thereby allowing a wide area of the inner wall surface of the flow path 48 and the surface of the valve body 42 to be sterilized by the ultraviolet light. Further, even if droplets of coffee, milk and/or the like, and/or airborne bacteria in the external air are attached to the inner wall surface of the outlet-side pipe line 57, the proliferation of bacteria can be contained so as not to spread to the cold water tank 2 and/or the hot water tank 3.

Further, the sterilization efficiency can be further improved in this water dispenser, since, in each of the discharge valves 8 and 9, the ultraviolet light which has reached the outer wall surface portion 59 extending along the flow path 48 is reflected by the ultraviolet light reflecting layer 60, and thus the ultraviolet light is more likely to be directed to the inner wall surface of the flow path 48 and the surface of the valve body 42.

Since, an angle valve having the outlet 47 facing downward is used as each of the discharge valves 8 and 9, in this water dispenser, even if the ultraviolet light leaks outside through the outlet 47, it can be prevented from being directly irradiated to a user.

Since this water dispenser includes, in each of the discharge valves 8 and 9, the ultra violet light emitting source 55 disposed downward of the inlet-side pipe line 56, it is possible to irradiate ultraviolet light to the inner wall surface of the inlet-side pipe line 56, and also to the inner wall surface of the outlet-side pipe line 57, without having to bypass the inlet-side pipe line 56. Therefore, the ultraviolet light can be efficiently irradiated to the entire inner wall surface of the flow path 48, in this water dispenser.

In addition, since, in each of the discharge valves 8 and 9 in this water dispenser, the inner wall surface of the outlet-side pipe line 57 is made of the ultraviolet light transmitting material 58 containing a photocatalyst, the sterilization efficiency at the inner wall surface of the outlet-side pipe line 57 can be improved by the photocatalyst. At the same time, the water droplets can be prevented from remaining on the inner wall surface thereof, due to the water-repellent capability of the photocatalyst. It is also possible to prevent the droplets of coffee, milk and/or the like from attaching onto the inner wall surface the outlet-side pipe line 57, and to further prevent the airborne bacteria attached to the inner wall surface of the outlet-side pipe line 57 from entering the inlet-side pipe line 56.

The sterilization capability to be provided in each of the discharge valves 8 and 9 can be determined such that the airborne bacteria attached to the inner wall surface of the outlet-side pipe line 57 cannot survive to spread to the inlet 46 of the each of the discharge valves 8 and 9. Whether to employ the ultraviolet light transmitting material 58 containing a photocatalyst and/or the ultraviolet light reflecting layer 60, and the extent of the area to be covered by the ultraviolet light transmitting material 58 and/or the ultraviolet light reflecting layer 60, can be determined as appropriate, as means to a desired end.

The scope of the present invention is not limited to the above mentioned embodiments, and includes all of the alterations and variations falling within the technical scope of the claims. For example, the present invention can be also applied to other types of water dispensers such as: a water dispenser in which a raw water container is placed therein with a water outlet port thereof facing downward; a water dispenser in which a raw water container is set at the upper portion of a housing and drinking water is configured to be transferred to a temperature control tank by gravity; and a water dispenser in which a buffer tank is not provided and drinking water is configured to be directly transferred from a cold water tank to a hot water tank.

### DESCRIPTION OF SYMBOLS

- 1: housing
- 2: cold water tank
- 3: hot water tank
- 8,9: discharge valve
- 15: outlet pipe
- 27: outlet pipe
- 41: valve casing
- 42: valve body
- 46: inlet
- 47: outlet
- 48: flow path
- 51: valve seat
- 54: body
- 55: ultra violet light emitting source
- 56: inlet-side pipe line
- 57: outlet-side pipe line
- 58: ultraviolet light transmitting material
- 59: outer wall surface portion
- 60: ultraviolet light reflecting layer

## Claims

1. A water dispenser comprising: a temperature control tank (2) housed in a housing (1), and a discharge valve (8) having an outlet (47) and connected to the temperature control tank (2);
wherein the temperature control tank (2) and the discharge valve (8) are configured such that drinking water in the temperature control tank (2) can be discharged through the outlet (47) of the discharge valve (8);
**characterized in that** the discharge valve (8) comprises: a body (54) which is made of a material capable of transmitting ultraviolet light, and which defines a flow path (48) extending from an inlet (46) of the discharge valve (8) to the outlet (47) ; and an ultra violet light emitting source (55) provided in the body (54).

2. The water dispenser according to claim 1, wherein the body (54) has an outer wall surface portion (59) extending along the flow path (48) and covered with an ultraviolet light reflecting layer (60) so as not to be exposed to outside.

3. The water dispenser according to claim 2, wherein the discharge valve (8) is an angle valve, and the outlet (47) faces downward, and
wherein the ultra violet light emitting source (55) is disposed downward of an inlet-side pipe line (56) extending between the inlet (46) and a valve seat (51).

4. The water dispenser according to any one of claims 1 to 3, further comprising an outlet-side pipe line (57) extending between the valve seat (51) and the outlet (47) and having an inner wall surface made of an ultraviolet light transmitting material (58) capable of transmitting ultraviolet light and containing a photocatalyst.
